# EUROPÄISCHE PATENTSCHRIFT

(11) **EP 0 671 215 B1**
(45) Veröffentlichungstag und Bekanntmachung des Hinweises auf die Patenterteilung: **06.05.1999**
(21) Anmeldenummer: 95101454.7
(22) Anmeldetag: 03.02.1995
(51) Int. Cl.: B04B 7/16, F16B 2/04, B01D 33/067

(54) **Vorrichtung zum Einspannen eines Filtermittels in einer Zentrifugentrommel**
Device for clamping of a filter means in a centrifuge drum
Dispositif pour le serrage d'un moyen de filtration dans un tambour de centrifugation

(30) Priorität: 07.03.1994 DE 4407515
(43) Veröffentlichungstag der Anmeldung: 13.09.1995
(73) Patentinhaber: Krauss-Maffei Aktiengesellschaft, 80997 München (DE)
(72) Erfinder: Feller, Johann, D-83104 Tuntenhausen (DE); Dommer, Erich, D-91242 Ottensoos (DE); Messner, Johann, D-85256 Pasenbach (DE)
(74) Vertreter: Rucker, Bernd, Dipl.-Ing.

(56) Entgegenhaltungen:
- FR-A- 2 293 858
- US-A- 3 283 909

## Beschreibung

Die Erfindung bezieht sich auf eine Vorrichtung zum Einspannen eines Filtermittels in einer Zentrifugentrommel mit einem Spannring, der in die Zentrifugentrommel mittels einer Spanneinrichtung in seinem Umfang vergrößerbar ist, so daß das Filtertuch zwischen dem Spannring und der inneren Mantelfläche der Zentrifugentrommel eingespannt ist, gemäß dem Oberbegriff des Anspruchs 1.

Eine derartige Filterzentrifuge, z.B. eine diskontinuierliche Schälzentrifuge, umfaßt eine in einem Gehäuse drehbar gelagerte Zentrifugentrommel, in die ein Füllorgan für die zu filtrierende Suspension und eine Vorrichtung zum Austragen der abgetrennten Produktschicht hineinragt. Innerhalb der Zentrifugentrommel befindet sich ein Filtermittel. Ein Füllorgan ragt in die Zentrifugentrommel hinein, und innerhalb der Zentrifugentrommel befindet sich eine Vorrichtung zum Austragen des abgeschleuderten Produkts.

Diskontinuierliche Filterzentrifugen werden eingesetzt, um Fest-Flüssig-Gemische (Suspensionen) diskontinuierlich zu trennen. Dazu wird die Suspension über das Füllorgan in die mit hoher Drehzahl rotierende Zentrifugentrommel geleitet. Durch die Rotationsbewegung der Trommel wird die Suspension an den Trommelmantel gedrückt, wobei der Feststoff von dem eingelegten Filtermittel zurückgehalten wird und die Flüssigkeit den sich bildenden Filterkuchen und das Filtermittel durchdringt und über die Filtratbohrungen aus der Trommel herausgeschleudert wird. Ist die Flüssigkeit bis zu einem der Produktspezifikation genügenden Anteil aus dem Filterkuchen abgeschleudert, wird der Filterkuchen (Produkt) mittels der Austragevorrichtung aus der Zentrifuge ausgetragen. Dies geschieht üblicherweise durch das langsame Zustellen eines Schälmessers in die sich drehende Trommel, wobei der Filterkuchen spanweise abgetragen und aus der Trommel ausgetragen wird.

Die Abtrennung des Feststoffes aus der Suspension geschieht mittels des Filtermittels. Das Filtermittel, meist ein Gewebe aus Metall- oder Kunststoffäden, wird in die Trommel eingelegt.

Hierbei ist es wichtig, daß das Filtermittel am Trommelmantel eben anliegt. Zwischen Filtermittel und Trommelmantel kann sich eine Dränageschicht befinden, durch die das Abfließen des das Filtermittel durchdringenden Filtrats zu den Filtratbohrungen hin erleichtert wird. Diese Dränageschicht kann von Vorteil sein. Sie ist allerdings nicht unbedingt notwendig und bei Pharmazentrifugen, bei denen die Anzahl der Bauteile im Verfahrensraum gering gehalten werden soll, eher von Nachteil.

Es ist wichtig, darauf hinzuweisen, daß das Filtermittel vollkommen faltenfrei in der Trommel liegen muß. Um dies sicherzustellen, wird das Filtermittel mit unterschiedlichen Ausführungen von Befestigungselementen in der Trommel gehalten.

Üblicherweise erfolgt die Befestigung des Filtermittels am vorderen und hinteren Ende der Trommel mittels eines flexiblen Gliedes, z.B. einer Rundschnur aus Kunststoff, Gummi, oder ähnlichem, oder mittels einer Packung in einer dafür vorgesehenen Nut. Dazu wird die Schnur bzw. die Packung mittels eines Holzkeils in die Nut eingeschlagen (siehe Systematik in der Konstruktion von Maschinen und Apparaten für die chemische Industrie, Sonderdruck aus "Konstruktion" 1967/6, Dipl.-Ing. O. Knott, insbesondere Abb. 4, 5, 6 und 7).

Es handelt sich bei dieser Befestigung des Filtermittels um eine primär kraftschlüssige Verbindung, die jedoch in bezug auf die Krafteinwirkung eine formschlüssige Charakteristik besitzt. Das Filtermittel wird mit sehr hoher Festigkeit in dem vorgesehenen Sitz gehalten.

Diese Ausführung bedingt allerdings eine aufwendige Trommelinnenkontur. Zum Herausarbeiten der Trommelinnenkontur ist ein hoher Zeit- und Materialaufwand erforderlich. Die notwendige Trommelinnenkontur eignet sich nicht für alle Beschichtungen, die üblicherweise auf Zentrifugentrommeln aufgebracht werden müssen. Einerseits können solche Konturen mit einigen Materialien nicht beschichtet werden und andererseits wird zum Festschlagen der Rundschnur eine örtlich sehr hohe Kraft auf die Beschichtung aufgebracht, so daß diese abspringen kann.

Die Rundschnur/Packung wird durch Hammerschläge mittels eines Holzkeils in die dafür vorgesehene Nut eingeschlagen. Bei Fehlern während der Montage, z.B. beim Abrutschen des Holzkeils, kann es zu Beschädigungen des Filtermittels kommen, wodurch das Filtermittel sofort wieder ausgetauscht werden muß. Weiter ist die extrem lange Montagezeit bei dieser Befestigungsmethode von ca. 4 bis 6 Stunden pro Filtermittel von Nachteil. Schließlich besteht bei Verwendung von steifen Filtermitteln die Gefahr, daß beim Umknicken in die Nut das Filtermittel im Filtrationsbereich Falten wirft, da die Nut nicht eben ist, sondern in einem Radius verläuft und das Filtermittel bei Montage gedehnt und gestaucht wird.

Eine weitere bewährte Methode zur Befestigung des Filtermittels in der Zentrifugentrommel besteht in der Verwendung sogenannter Flachspannringe. Hierbei wird das Filtermittel mittels eines zu einem Ring gebogenen Flachstahls an den beiden Trommelenden niedergedrückt, wobei die Fixierung mittels eine Schraubenschlosses erfolgt, das zur Erhöhung des Druckes auf das Filtermittel immer weiter auseinandergeschraubt wird.

Die Flachspannringe erfordern zwar keine komplexe Trommelgeometrie und können bei allen beschichteten Trommeln eingesetzt werden. Auch ist die Montagezeit bei Flachspannringen verhältnismäßig geringt.

Um die Flachspannringe zu spannen, müssen die Ringe allerdings in der Nähe des Spannschlosses über das zu verspannende Filtermittel geschoben werden, wobei die Reibungskraft, die dieser Bewegung entgegenwirkt, proportional zu der Verspannung des Spannrings steigt, wodurch die Möglichkeiten des Verspannens begrenzt sind. Im Zentrifugalfeld werden die Filtermittel (z.B. mehrlagige Filtermittel oder auch Filtermittel mit unterliegenden Dränagegewebe) zusammengedrückt, da die Filtermittel und die Dränagegewebe meistens aus Kunststoffgeweben bestehen, wogegen die Spannringe kaum gedehnt werden. D.h., daß im Zentrifugelfeld die Fixierwirkung durch die Spannringe nachläßt bzw. geringer wird.

Um eine gewisse Formschlüssigkeit mittels Spannringen zu erreichen, werden sogenannte Rundspannringe verwendet, die in relativ einfache Nuten eingepreßt werden. Hierbei ergibt sich eine formschlüssige Fixierung des Filtermittels und ein fester Sitz bei verhältnismäßig geringer Montagezeit.

Zur Fixierung der Spannringe sind allerdings Spannschlösser erforderlich, die die bereits oben in bezug auf die Flachspannringe erläuterten Nachteile aufweisen. Eine derartige Spannvorrichtung ist z.B. in der DE 2938684 beschrieben. Aus der EP 0398173 ist eine Vorrichtung zum Kalten von Filterelementen bekannt, bei der das Filtermittel mittels eines auf dem Filtermittel liegenden Lochblechs fixiert wird. Diese Vorrichtung hat den Nachteil, daß die freie Filterfläche des Filtermittels um die Stege des Lochblechs verringert wird. Zur Fixierung und Abdichtung des Filtermittels muß eine komplex gestaltete Dichtung eingesetzt werden. Das Lochblech fixiert das Filtermittel durch sein Gewicht im Fliehkraftfeld. Eine Verspannung des Filtermittels mittels des Lochblechs ist nicht möglich.

Der Erfindung liegt die **Aufgabe** zugrunde, eine Vorrichtung zum Einspannen eines Filtermittels in einer Zentrifugentrommel der eingangs genannten Art zu schaffen, die bei einfacher Konstruktion leicht und schnell zu montieren ist und zugleich eine besonders sichere Festlegung des Filtermittels in der Zentrifugentrommel ermöglicht.

Dabei soll die Spanneinrichtung so ausgebildet sein, daß ohne entsprechende Vorkehrungen an dem Räumorgan der Zentrifuge der Feststoff bis auf eine Restschicht von etwa 4 mm aus der Zentrifuge ausgeräumt werden kann.

Diese Aufgabe wird erfindungsgemäß durch die im Anspruch 1 gekennzeichnete Erfindung gelöst, d.h. dadurch, daß die Spanneinrichtung als eine Ratschen-Einrichtung ausgebildet ist.

Die Erfindung bedient sich der Erkenntnis, daß die Zentrifugalkraft vorteilhaft zum Spannen eines Spannrings ausgenutzt werden kann.

Die erfindungsgemäße Vorrichtung ermöglicht, daß ein Spannring jeweils am vorderen und hinteren Ende der Trommel in die Trommel eingelegt und dort seine entsprechenden Endabschnitte miteinander in Eingriff gebracht werden. Dann erfolgt eine entsprechende Vorspannung des Spannrings, wobei der Spannring in einer Nut angeordnet sein kann, die jedoch, je nach Elastizität des Filtermittels, nicht unbedingt erforderlich ist, da durch die Selbstspann-Charakteristik des Spannrings und die örtliche Zusammenpressung des Filtermittels beim Beschleunigen der Zentrifugentrommel eine Nut und somit eine formschlüssige Verbindung entsteht.

Vorteilhafte Ausgestaltungen der Erfindung ergeben sich aus den Unteransprüchen.

Gemäß einer vorteilhaften Ausgestaltung der Erfindung ist vorgesehen, daß Endabschnitte des Spannrings an einander zugewandten Flächen miteinander in Eingriff bringbare, in der einen Richtung gegeneinander bewegbare und in der entgegengesetzten Richtung selbsthemmende Rast-Profile aufweisen. Derartige in einer Richtung selbsthemmende Rastprofile sind einfach und billig herzustellen und gestatten eine leichte Montage und Demontage in der Zentrifugentrommel.

Derartige Rast-Profile sind in vorteilhafter Weise als Sägezahnprofile ausgebildet.

Eine weitere vorteilhafte Ausgestaltung der Erfindung sieht vor, daß der Flankenwinkel der Zähne des Sägezahnprofils in Spannrichtung des Spannrings geringer als in entgegengesetzter Richtung ist. Insbesondere soll der Flankenwinkel in Spannrichtung etwa 15° bis 35° und in entgegengesetzter Richtung etwa 90° bis 105° betragen. Hierdurch wird einerseits die Spannwirkung durch auseinandergleitende Endabschnitte beim Hochfahren der Zentrifugentrommel und andererseits eine sichere Verriegelung der Endabschnitte gegeneinander ermöglicht.

Gemäß einer weiteren vorteilhaften Ausgestaltung der Erfindung ist vorgesehen, daß die einander zugewandten Flächen an der radialen Innenseite des einen Endabschnitts und an der radialen Außenseite des anderen Endabschnitts ausgebildet sind, wobei die miteinander in Eingriff gebrachten Endabschnitte etwa die gleiche Höhe wie der übrige Spannring aufweisen. Bei dieser Spanneinrichtung werden die Endabschnitte des Spannrings anfänglich mittels der Schwerkraft in Eingriff gebracht. Die eigentliche Verspannung des Filtermittels erfolgt dann beim Hochfahren der Zentrifuge mittels Zentrifugalkraft. Mit dieser Ausführungsform der Erfindung ist somit eine sehr einfache Montage möglich.

Entsprechend ist gemäß einer weiteren vorteilhaften Ausgestaltung der Erfindung vorgesehen, daß ein Endabschnitt des Spannrings als Nut und der andere Endabschnitt des Spannrings als eine elastische, mit der Nut in Eingriff bringbare Gabel ausgebildet ist. Dabei sind die Nut und die Gabel in Achsrichtung des Spannrings ausgebildet, und die einander zugewandten Flächen sind jeweils an den Innenseiten der Nut bzw. den Außenseiten der Gabel angeordnet.

Die Spannkraft, die der erfindungsgemäße Spannring auf das Filtermittel aufbringen kann, ist wesentliche größer als dies durch menschliche Kraft üblicherweise geschehen kann. Ein Nachsetzen des Filtermittels im Zentrifugalfeld, auch bei Füllung der Trommel, wird durch ein automatisches Nachspannen des Rings durch Weiterspringen des Verschlusses in die jeweilig nächste Raste erreicht.

Durch die Selbstspannung des Spannrings wird eine Linien- oder Flächenberührung im gesamten Trommelumfang erreicht, die auch nicht an der Spanneinrichtung unterbrochen wird. Dies verbessert die Dichtwirkung des Filtermittels an den Rändern und erübrigt das Einbringen eines zusätzlichen Dichtelements.

Die Ausführung des Spannrings ist insbesondere für die pharmazeutische Industrie geeignet, da keine bewegten Elemente oder einziehbare Gelenke für den Spannring benötigt werden.

Durch z.B eine flache Ausführung des Spannrings und das Fehlen eines zusätzlichen Schraubspannschlosses kann der Filterkuchen bis auf eine sehr dünne Restschicht aus der Zentrifuge ausgeschält werden. Konstruktive Besonderheiten an der Schälvorrichtung sind somit nicht mehr erforderlich.

Die Erfindung ist in der Zeichnung dargestellt und im folgenden näher beschrieben. Es zeigen:
- Fig. 1: eine schematische Ansicht einer Filterzentrifuge;
- Fig. 2: eine vergrößerte Schnittansicht der Filterzentrifuge gemäß Fig. 1 längs der Linie II-II;
- Fig. 3: eine Ansicht einer ersten Ausführungsform des Spannrings;
- Fig. 4: eine vergrößerte Teilansicht des Spannrings gemäß Fig. 3 im entspannten Zustand;
- Fig. 5: eine vergrößerte Teilansicht des Spannrings gemäß Fig. 3 im gespannten Zustand mit einer Detailansicht des Sägezahnprofils;
- Fig. 6: eine Ansicht einer zweiten Ausführungsform des Spannrings;
- Fig. 7: eine vergrößerte Teilansicht des Spannrings gemäß Fig. 6 mit einer vergrößerten Darstellung des Sägezahnprofils im entspannten Zustand; und
- Fig. 8: eine vergrößerte Teilansicht des Spannrings gemäß Fig. 6 im gespannten Zustand.

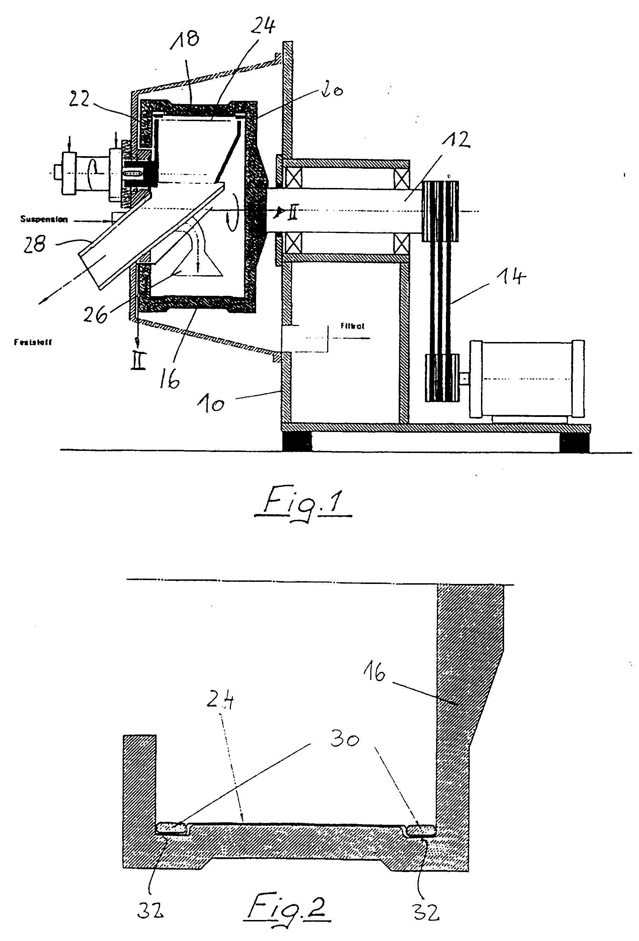

Die in Fig. 1 dargestellte diskontinuierliche Filterzentrifuge weist ein stationäres Maschinengestell 10 auf, auf dem eine Zentrifugenwelle 12 drehbar gelagert ist, und an dem sich an einem Ende ein Kupplungssystem 14 befindet, über das die Welle 12 in Rotation versetzt werden kann. Am anderen Ende der Welle 12 ist eine Zentrifugentrommel 16, bestehend aus einem Trommelmantel 18, einem Trommelboden 20 und einem Bordring 22, befestigt. Die Zentrifugentrommel 16 kann Bohrungen zur Abführung von Filtrat aufweisen. Innerhalb der Zentrifugentrommel 16 befindet sich ein Filtermittel 24. In die Zentrifugentrommel 16 hinein ragt ein Füllorgan 26. Ferner befindet sich innerhalb der Zentrifugentrommel 16 eine Vorrichtung 28 zum Austrag des abgeschleuderten Produkts.

Wie in Fig. 2 dargestellt, wird das Filtermittel 24 mittels eines Spannrings 30 in Nuten 32 festgelegt. Wenn es sich um ein elastisches Filtermittel 24 handelt, können die Nuten 32 gegebenenfalls entfallen, da sich der Spannring 30, wie bereits erwähnt, aufgrund der Zentrifugalkraft in das Filtermittel 24 einpreßt.

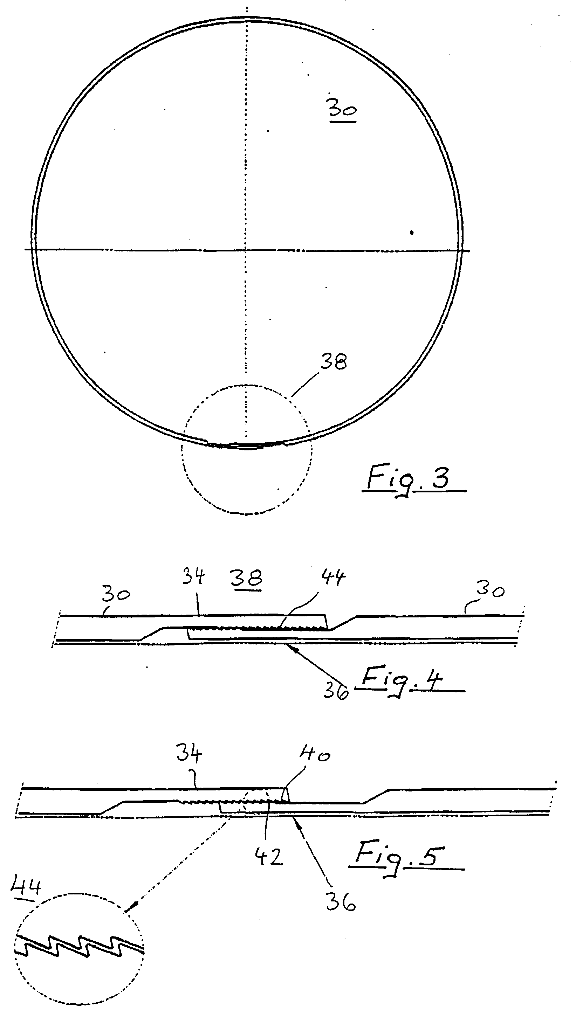

Fig. 3 zeigt eine erste Ausführungsform des Spannrings 30. Der Spannring 30 ist kreisförmig gebogen und besteht aus einem einteiligen Flachmaterial. An seinen abgeflachten Endabschnitten 34, 36 ist der Spannring 30 mit einer Spanneinrichtung 38 in Form einer in einer Richtung selbsthemmenden Ratschen-Einrichtung versehen. D.h., die einander gegenüberliegenden Flächen 40, 42 weisen ein selbsthemmendes Rast-Profil auf, das in dem dargestellten Ausführungsbeispiel als sägezahnprofil 44 ausgebildet ist. Das Sägezahnprofil 44 ist an der radialen Innenseite und der radialen Außenseite der Endabschnitte 34, 36 ausgebildet. Dabei ist der Flankenwinkel der einzelnen Zähne (siehe Fig. 5) des Sägezahnprofils 44 in Spannrichtung des Spannrings 30 geringer als in entgegengesetzter Richtung. Vorzugsweise beträgt der Flankenwinkel in Spannrichtung etwa 15° bis 35° und in entgegengesetzter Richtung etwa 90° bis 105°.

In Fig. 4 ist der anfängliche Eingriff der Endabschnitte 34, 36 im ungespannten oder minimal vorgespannten Zustand, d.h. im Ruhezustand der Zentrifugentrommel 16, dargestellt. Fig. 5 zeigt die Spanneinrichtung 38 des Spannrings 30 im gespannten Zustand, nachdem die Zentrifugentrommel 16 ihre Enddrehzahl erreicht hat. Beim Hochfahren der Zentrifugentrommel 16 wird der Spannring 30 mittels der Zentrifugalkraft nach außen gegen das Filtermittel 24 gedrückt, wobei sich die Spanneinrichtung 38 ausdehnt, d.h. die beiden Endabschnitte 34, 36 des Spannrings 30 gleiten auf dem Sägezahnprofil 44 und werden gegen eine Entspannungsbewegung verrastet.

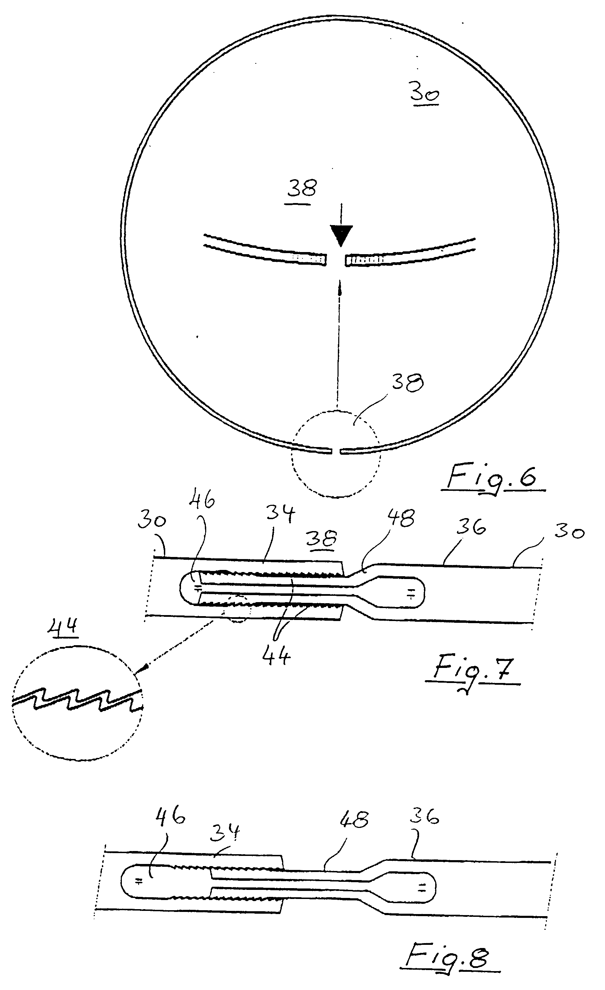

In den Fig. 6 bis 8 ist eine weitere Ausführungsform des Spannrings 30 dargestellt. Der Spannring 30 selbst entspricht im wesentlichen der ersten Ausführungsform, d.h. er besteht aus einem Flachmaterial, z.B. einem Flachstahl. Es sind allerdings bei beiden Ausführungsformen ebenfalls andere Profile, z.B. Hohlprofile, ballige Profile usw., möglich.

Diese Ausführungsform unterscheidet sich von der ersten Ausführungsform in der Ausbildung der Spanneinrichtung 38. In diesem Fall ist der eine Endabschnitt 34 des Spannrings 30 als Nut 46 und der andere Endabschnitt 36 des Spannrings 30 als eine elastische, mit der Nut 46 in Eingriff bringbare Gabel 48 ausgebildet. Die Nut 46 und die Gabel 48 sind in Achsrichtung des Spannrings 30 ausgebildet und weisen an den einander zugewandten Flächen 40, 42, d.h. an den Innenseiten der Nut 46 und den Außenseiten der Gabel 48, ein Sägezahnprofil 44 auf. In diesem Fall handelt es sich um einen sogenannten "Vielzahn-Verschluß". Es ist ebenfalls möglich, nur ein Paar der einander zugewandten Flächen 40, 42 mit dem in Eingriff bringbaren Sägezahnprofil 44 zu versehen, wenn dies eine ausreichende Stabilität gewährleistet.

Der Spannring 30 wird in die Zentrifugentrommel 16 gelegt, und im lockeren Zustand wird der eine Endabschnitt 36 in den anderen Endabschnitt 34 der Spanneinrichtung 38 eingesteckt. Die Fixierung des Spannrings 30 erfolgt anfangs zur Erzeugung einer gewissen minimalen Vorspannung von Hand und dann beim Hochfahren der Zentrifugentrommel 16 mittels der Zentrifugalkraft. Hinsichtlich der Ausbildung des Sägezahnprofils 44 entspricht die zweite Ausführungsform der Spanneinrichtung 38 der ersten Ausführungsform. Durch die Ausbildung des Endabschnitts 36 als elastische Gabel 48 ist eine sichere Ineingriffnahme der einander gegenüberliegenden Flächen 40, 42 und damit der Sägezahnprofile 44 gewährleistet.

## Patentansprüche

1. Vorrichtung zum Einspannen eines Filtermittels (24) in einer Zentrifugentrommel (16) mit einem Spannring (30), der in der Zentrifugentrommel (16) mittels einer Spanneinrichtung (38) in seinem Umfang vergrößerbar ist, so daß das Filtertuch zwischen dem Spannring (30) und der inneren Mantelfläche der Zentrifugentrommel (16) eingespannt ist, dadurch **gekennzeichnet**, daß die Spanneinrichtung (38) als eine Ratschen-Einrichtung ausgebildet ist.

2. Vorrichtung nach Anspruch 1, dadurch **gekennzeichnet**, daß Endabschnitte (34, 36) des Spannrings (30) an einander zugewandten Flächen (40, 42) miteinander in Eingriff bringbare, in der einen Richtung gegeneinander bewegbare und in der entgegengesetzten Richtung selbsthemmende Rast-Profile aufweisen.

3. Vorrichtung nach Anspruch 1 oder 2 , dadurch **gekennzeichnet**, daß die Rast-Profile als Sägezahnprofile (44) ausgebildet sind.

4. Vorrichtung nach einem der Ansprüche 1 bis 3, dadurch **gekennzeichnet**, daß der Flankenwinkel der einzelnen Zähne des Sägezahnprofils (44) in Spannrichtung des Spannrings (30) geringer als in entgegengesetzter Richtung ist.

5. Vorrichtung nach einem der Ansprüche 1 bis 4, dadurch **gekennzeichnet**, daß der Flankenwinkel in Spannrichtung etwa 15° bis 35° und in entgegengesetzter Richtung etwa 90° bis 105° beträgt.

6. Vorrichtung nach einem der Ansprüche 1 bis 5, dadurch **gekennzeichnet**, daß die einander zugewandten Flächen (40, 42) an der radialen Innenseite des einen Endabschnitts (36) und an der radialen Außenseite des anderen Endabschnitts (34, 36) ausgebildet sind.

7. Vorrichtung nach Anspruch 6, dadurch **gekennzeichnet**, daß die miteinander in Eingriff gebrachten Endabschnitte (34, 36) etwa die gleiche Höhe wie der übrige Spannring (30) aufweisen.

8. Vorrichtung nach einem der Ansprüche 1 bis 5, dadurch **gekennzeichnet**, daß ein Endabschnitt (34) des Spannrings (30) als Nut (46) und der andere Endabschnitt (36) des Spannrings (30) als eine elastische, mit der Nut (46) in Eingriff bringbare Gabel (48) ausgebildet ist.

9. Vorrichtung nach Anspruch 8, dadurch **gekennzeichnet**, daß die Nut (46) und die Gabel (48) in Achsrichtung des Spannrings (30) ausgebildet sind und die einander zugewandten Flächen (40, 42) jeweils an den Innenseiten der Nut (46) und den Außenseiten der Gabel (48) angeordnet sind.

10. Vorrichtung nach einem der Ansprüche 1 bis 9, dadurch **gekennzeichnet**, daß der Spannring (30) aus einem Flachmaterial besteht.

## Claims

1. Device for clamping a filter means (24) in a centrifugal drum (16) with a clamping ring (30), which may be enlarged in circumference in the centrifugal drum (16) by means of a clamping means (38) so that the filter cloth is clamped in between the clamping ring (30) and the inside shell face of the centrifugal drum (16), characterised in that the clamping means (38) is constructed in the form of a ratchet means.

2. Device according to Claim 1, characterised in that end sections (34, 36) of the clamping ring (30) on facing surfaces (40, 42) have catch profiles, which may be brought into engagement with one another, are movable in one direction relative to one another and are self-locking in the opposite direction.

3. Device according to Claim 1 or 2, characterised in that the catch profiles are constructed in the form of sawtooth profiles (44).

4. Device according to one of Claims 1 to 3, characterised in that the flank angle of the individual teeth of the sawtooth profile (44) is smaller in the clamping direction of the clamping ring (30) than in the opposite direction.

5. Device according to one of Claims 1 to 4, characterised in that the flank angle in clamping direction amounts to about 15° to 35° and in the opposite direction amounts to about 90° to 105°.

6. Device according to one of Claims 1 to 5, characterised in that the facing surfaces (40, 42) are constructed on the radial inside of one end section (36) and on the radial outside of the other end section (34, 36).

7. Device according to Claim 6, characterised in that the end sections (34, 36) brought into engagement with one another have approximately the same height as the rest of the clamping ring (30).

8. Device according to one of Claims 1 to 5, characterised in that one end section (34) of the clamping ring (30) is constructed in the form of a groove (46) and the other end section (36) of the clamping ring (30) is constructed in the form of an elastic fork (48) which may be brought into engagement with the groove (46).

9. Device according to Claim 8, characterised in that the groove (46) and the fork (48) are constructed in the axial direction of the clamping ring (30) and the facing surfaces (40, 42) are respectively arranged on the insides of the groove (46) and the outsides of the fork (48).

10. Device according to one of Claims 1 to 9, characterised in that the clamping ring (30) is made of flat material.

## Revendications

1. Dispositif pour le serrage d'un moyen de filtration (24) dans un tambour de centrifugation (16) avec un anneau de serrage (30) dont la circonférence est susceptible d'être augmentée dans ledit tambour de centrifugation (16) par un moyen de serrage (38) de telle sorte que le tissu filtrant est serré entre ledit anneau de serrage (30) et la surface latérale intérieure dudit tambour de centrifugation (16), **caractérisé** en ce que ledit moyen de serrage (38) est conformé en tant que moyen de cliquet.

2. Dispositif selon la revendication 1, **caractérisé** en ce que des parties extrêmes (34, 36) dudit anneau de serrage (30) comprennent, à des surfaces l'une vis-à-vis de l'autre, des profils à crans d'arrêt, susceptibles de venir en prise l'un de l'autre, d'être déplacés l'un par rapport à l'autre dans un premier sens et auto-bloquants dans le sens oppose.

3. Dispositif selon la revendication 1 ou 2, **caractérisé** en ce que lesdits profils à crans d'arrêt sont conformés en tant que profils à dents de scie (44).

4. Dispositif selon l'une quelconque des revendications 1 à 3, **caractérisé** en ce que l'angle des flancs des dents individuelles dudit profil à dents de scie (44) est moins important dans la la direction de serrage dudit anneau de serrage (30) que dans la direction opposée.

5. Dispositif selon l'une quelconque des revendications 1 à 4, **caractérisé** en ce que l'angle des flancs est de l'ordre de 15° à 35° dans la direction de serrage et de l'ordre de 90° à 105° dans la direction opposée.

6. Dispositif selon l'une quelconque des revendications 1 à 5, **caractérisé** en ce que lesdites surfaces (40, 42) l'une vis-à-vis de l'autre sont formées du côté intérieur radial de l'une desdites parties extrêmes (36) et du côté extérieur radial de l'autre desdites parties extrêmes (34, 36).

7. Dispositif selon la revendication 6, **caractérisé** en ce que lesdites parties extrêmes (34, 36) mises en prises l'une avec l'autre présentent sensiblement la même hauteur que le reste dudit anneau de serrage (30).

8. Dispositif selon l'une quelconque des revendications 1 à 5, **caractérisé** en ce que l'une des parties extrêmes (34) dudit anneau de serrage (30) est conformée en tant que gorge (46) et l'autre des parties extrêmes (36) dudit anneau de serrage (30) en tant que fourche (48) élastique susceptible de venir en prise avec ladite gorge (46).

9. Dispositif selon la revendication 8, **caractérisé** en ce que ladite gorge (46) et ladite fourche (48) sont formées dans la direction axiale dudit anneau de serrage (30) et lesdites surfaces l'une vis-à-vis de l'autre (40, 42) sont disposées respectivement des côtés intérieurs de ladite gorge (46) et des côtés extérieurs de ladite fourche (48).

10. Dispositif selon l'une quelconque des revendications 1 à 9, **caractérisé** en ce que ledit anneau de serrage (30) consiste en un matériau plat.
